(19) Europäisches Patentamt

European Patent Office

Office européen des brevets

(11) Veröffentlichungsnummer : **0 007 528**
**B1**

(12) **EUROPÄISCHE PATENTSCHRIFT**

(45) Veröffentlichungstag der Patentschrift :
21.10.81

(21) Anmeldenummer : 79102418.5

(22) Anmeldetag : 12.07.79

(51) Int. Cl.³ : **F 04 C 19/00, B 01 D 19/00**

(54) Flüssigkeitsringpumpenanordnung.

(30) Priorität : 24.07.78 DE 2832401

(43) Veröffentlichungstag der Anmeldung :
06.02.80 (Patentblatt 80/03)

(45) Bekanntmachung des Hinweises auf die Patenterteilung : 21.10.81 Patentblatt 81/42

(84) Benannte Vertragsstaaten :
AT BE CH FR GB IT NL SE

(56) Entgegenhaltungen :
DE - A - 2 409 343
US - A - 3 091 098
US - A - 4 087 208

(73) Patentinhaber : **SIEMENS AKTIENGESELLSCHAFT**
**Berlin und München**
**Postfach 22 02 61**
**D-8000 München 22 (DE)**

(72) Erfinder : **Schmidt, Heribert**
**Ebrardstrasse 25**
**D-8520 Erlangen (DE)**
Erfinder : **Scheubeck, Egmont**
**Dresdener Strasse 14b**
**D-8520 Erlangen (DE)**

Imprimerie Jouve, 17, rue du Louvre, 75001 Paris, France

Flüssigkeitsringpumpenanordnung

Die Erfindung bezieht sich auf eine Flüssigkeitsringpumpenanordnung zum Absaugen von gasförmigen Säuren, z.B. Salzsäure und Säureanhydriden, z.B. $SO_2$, bei der als Betriebsflüssigkeit Öl vorgesehen ist, das über einen nachgeschalteten Flüssigkeitsabscheider in die Pumpe zurückführbar ist.

Zur Absaugung von aggressiven Gasen der vorstehend genannten Art, z.B. Schwefeldioxyd, müssen im allgemeinen aus hochwertigem Edelstahl gefertigte Pumpen verwendet werden, da ansonsten — selbst bei der Verwendung von Öl als Betriebsmedium — die Gefahr der Pumpenkorrosion besteht.

Die Aufgabe der vorliegenden Erfindung besteht darin, bei einer Anordnung der eingangs genannten Art den Säureangriff auf die Pumpe durch Verringerung der Wasserstoffionenkonzentration im Öl möglichst zu verhindern. Diese Aufgabe wird erfindungsgemäß dadurch gelöst, daß das Öl der aus nicht säurebeständigem Werkstoff bestehenden Pumpe über eine Entgasungseinrichtung geführt ist. Die Entgasung wird dabei vorteilhafterweise bei einem Druck von etwa 20 bis 50 mbar und einer Temperatur von 40 bis 80 °C vorgenommen. Bei Verwendung eines derart behandelten Öls, das weitgehend neutral bleibt, können dann die Pumpen aus gewöhnlichem Stahl gefertigt werden.

Der Entgasung liegt folgende Überlegung zugrunde: Wasserfreie Schwefelsäure und trockener Chlorwasserstoff sind z.B. gegenüber Eisen nicht aggressiv. Die eigentliche Säurewirkung kommt durch die Dissoziation in Gegenwart von Wasser zustande, und zwar durch die Bildung von Wasserstoffionen. Werden Säureanhydride in Wasser gebracht, so ist die Säurestärke bzw. der pH-Wert bei gegebenem Dissoziationsgrad vor allem von der Menge der eingebrachten Säureanhydride abhängig. Wird jedoch umgekehrt eine geringe begrenzte Menge Wasser zu einem großen Überschuß an Säureanhydriden gebracht, so kann nur soviel Säure gebildet werden, wie der Wassermenge entspricht. So wurde festgestellt, daß der pH-Wert von z.B. 7 auf 1 absank, also eine starke Säurewirkung auftrat. Dies beruht darauf, daß das Öl und auch das angesaugte Schwefeldioxyd unvermeidlich Spuren von Feuchtigkeit enthalten, so daß die entstehende schweflige Säure dissoziiert. Da das angesaugte $SO_2$ im Überschuß vorliegt, ist der Dissoziationsgrad und damit der pH-Wert vom Wasseranteil anhängig oder umgekehrt, der pH-Wert ein Maß für den Wassergehalt. Durch Entgasung des Öls im Vakuum zwischen 20 bis 80 mbar und 40 bis 80 °C läßt sich das Wasser weitgehend aus dem Öl entfernen und damit die Wasserstoffionenkonzentration auf ein ungefährliches Maß senken.

Anhand einer Zeichnung sei die Erfindung näher erläutert:

Aus einem Behälter 3 wird z.B. Schwefeldioxyd mit einem Druck von 100 mbar über eine Leitung 11 von einer Flüssigkeitsringpumpe 1 angesaugt. Das Betriebsmedium der Flüssigkeitsringpumpe ist Öl. Das druckseitige Gemisch von Öl und Schwefeldioxyd wird über eine Leitung 12 zu einem Flüssigkeitsabscheider 2 mit etwa einem Druck von 1,3 bar geführt. Im Flüssigkeitsabscheider 2 wird das Gas vom Öl getrennt. Das Öl 21 sammelt sich am Boden des Abscheiders 2, während das Gas über eine Leitung 22 in den weiteren Prozess geführt wird. Das im Abscheider 2 befindliche Öl 21 gelangt über die Leitung 24 wieder zurück in die Flüssigkeitsringpumpe 1. Ein Teil des Öls 21 gelangt über eine Leitung 25 in eine Entgasungseinrichtung 4. In der Entgasungseinrichtung 4 wird das Öl durch Düsen 41 fein zerstäubt und mittels einer Heizung 42 auf etwa 60 °C aufgeheizt. Bei einem Druck von z.B. 30 mbar in der Entgasungseinrichtung 4 wird dann das Öl etwa eine Stunde lang entgast. Hierdurch werden Schwefeldioxyd, schweflige Säure und Wasserdampf aus dem Öl entfernt. Zum Erzeugen des verminderten Druckes und zum Absaugen der Gase aus der Entgasungseinrichtung 4 ist eine weitere Flüssigkeitsringpumpe 6 mit nachgeschaltetem Abscheider 61 vorgesehen.

Das gereinigte Öl gelangt über eine Leitung 43 und eine Pumpe 5 wieder in den Abscheider 2 zurück. Vorteilhaft kann es auch sein, das gereinigte Öl direkt zur Saugseite der Pumpe 1 zu führen, wie durch die gestrichelte Leitung 51 angedeutet, da hierdurch nur eine verhältnismäßig kleine Druckdifferenz zwischen Entgasungseinrichtung und Einführung des gereinigtem Öls in die Pumpe zu überwinden ist.

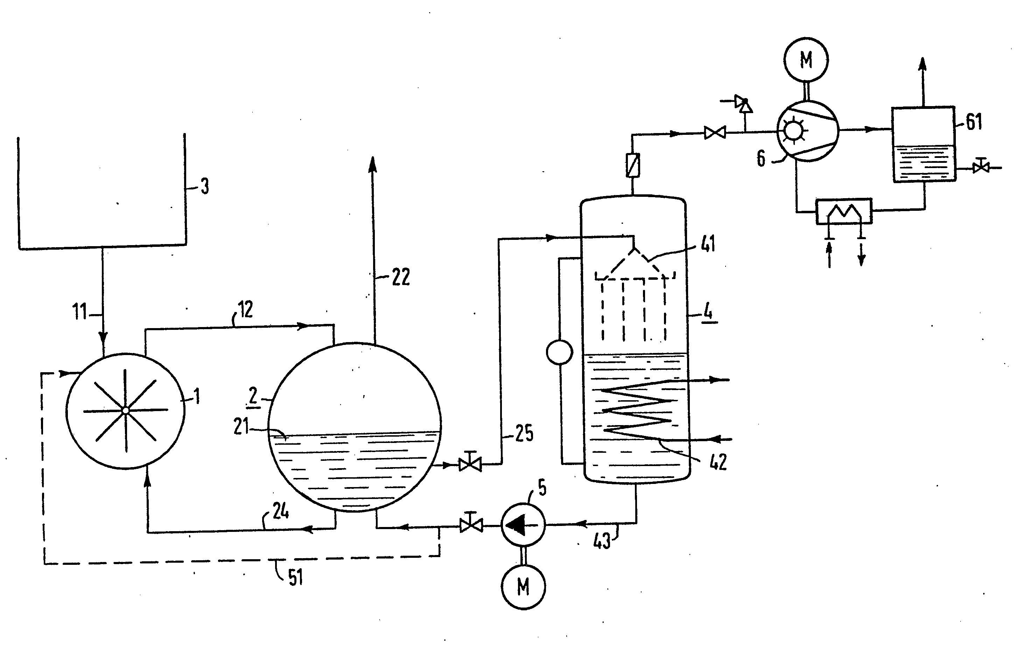

**Ansprüche**

1. Flüssigkeitsringpumpenanordnung zum Absaugen von gasförmigen Säureanhydriden und Halogenwasserstoffen, bei der als Betriebsflüssigkeit Öl vorgesehen ist, das über einen nachgeschalteten Flüssigkeitsabscheider in die Pumpe rückführbar ist, dadurch gekennzeichnet, daß das Öl (21) der aus nicht säurebeständigem Werkstoff bestehenden Pumpe über eine Entgasungseinrichtung (4) geführt ist.

2. Flüssigkeitsringpumpenanordnung nach Anspruch 1, dadurch gekennzeichnet, daß die Entgasungseinrichtung (4) zwischen Flüssigkeitsabscheider (2) und Saugseite der Pumpe (1) angeordnet ist.

3. Flüssigkeitsringpumpenanordnung nach Anspruch 1, dadurch gekennzeichnet, daß die Entgasungseinrichtung (4) bei einem Druck von 20 bis 50 mbar und einer Temperatur von 40 bis 80 °C arbeitet und das zu entgasende Öl durch Düsen fein verteilt wird.

**Claims**

1. A liquid seal pump arrangement for sucking off gaseous acid anhydrides and hydrogen halides, in which oil is used as working liquid which can be recirculated to the pump by way of a following liquid separator, characterised in that the oil (21) of the pump, which latter is made of material which is not resistant to acid, is led through a degasifying device (4).

2. A liquid seal pump arrangement as claimed in Claim 1, characterised in that the degasifying device (4) is arranged between the liquid separator (2) and the suction side of the pump (1).

3. A liquid seal pump arrangement as claimed in Claim 1, characterised in that the degasifying device (4) operates at a pressure of 20 to 50 mbar and at a temperature of 40 to 80 °C, and that the oil which is to be degasified is finely distributed therein by means of nozzles.

**Revendications**

1. Installation de pompage à circuit de liquide, destinée à aspirer des anhydrides d'acide et des hydracides halogénés sous forme de gaz, dans laquelle il est prévu, comme liquide de fonctionnement, de l'huile, que l'on peut recycler à la pompe par l'intermédiaire d'un séparateur de liquide en aval, caractérisée en ce que l'huile (21) de la pompe, qui est en un matériau ne résistant pas aux acides, est envoyée dans un dispositif (4) de dégazage.

2. Installation de pompage à circuit de liquide selon la revendication 1, caractérisée en ce que le dispositif (4) de dégazage est interposé entre un séparateur (2) de liquide et le côté aspiration de la pompe (1).

3. Installation de pompage à circuit de liquide suivant la revendication 1, caractérisée en ce que le dispositif (4) de dégazage travaille sous une pression de 20 à 50 millibars et à une température de 40 à 80 °C et l'huile à dégazer est finement répartie par des buses.